## Europäisches Patentamt

## European Patent Office

## Office européen des brevets

(19)

(11) Veröffentlichungsnummer: **0 171 126**
**B1**

(12) # EUROPÄISCHE PATENTSCHRIFT

(45) Veröffentlichungstag der Patentschrift:
**11.05.88**

(21) Anmeldenummer: **85201280.6**

(22) Anmeldetag: **07.08.85**

(51) Int. Cl.⁴: **F 15 B 1/04,** F 17 C 5/06,
F 16 F 9/43

(54) **Fülleinrichtung.**

(30) Priorität: **10.08.84 NL 8402484**

(43) Veröffentlichungstag der Anmeldung:
**12.02.86 Patentblatt 86/7**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 000 355**
**DE - A - 2 238 356**
**DE - A - 2 447 343**
**DE - A - 2 843 605**
**DE - A - 3 103 952**
**FR - A - 2 331 748**
**GB - A - 264 452**

**OLEODINAMICA-PNEUMATICA, Band 17, Nr. 2, Februar 1976, Seiten 50-54, Mailand, IT; "Qualche novita' sul mercato degli accessori"**

(73) Patentinhaber: **Hagen, Koenraad, Putterweg 145, NL-3851 VE Ermelo (NL)**

(72) Erfinder: **Hagen, Koenraad, Putterweg 145, NL-3851 VE Ermelo (NL)**

(74) Vertreter: **Timmers, Cornelis Herman Johannes et al, EXTERPATENT Willem Witsenplein 4, NL-2596 BK 's-Gravenhage (NL)**

## Beschreibung

Die Erfindung bezieht sich auf eine Fülleinrichtung zum Füllen eines mit einem Schraubverschluss versehenen, unter Druck stehenden Gasbehälters, insbesondere einer hydro-pneumatischen Federeinrichtung, mit einem Austauschverschluss mit gleichem Aussengewinde wie der ursprüngliche Schraubverschluss des Gasbehälters, mit einer abdichtenden, mit der Gasbehälterwandung zusammenwirkenden Schulter und mit einem zu dem Aussengewinde koaxialen zylindrischen Teil, mit einem einen Flansch und einen zylindrischen Teil aufweisenden Spannelement, einer mit einer Füllöffnung versehenen Füllhülse, die den zylindrischen Teil des Spannelements abdichtend umgibt und mit einem von der Füllöffnung ausgehenden Kanal versehen ist und die zwischen dem Flansch und der Wandung des Gasbehälters abgedichtet verspannbar ist, wobei innerhalb des Spannelements mit dem Austauschverschluss zusammenwirkende Teile angeordnet sind.

Hydropneumatische Federeinrichtungen werden, wie bekannt, in verschiedenen modernen Automobilen eingesetzt, wie z.B. Citroen-Modelle GS, BX und CX. Nach einer gewissen Zeit nimmt der Druck in den kugelförmigen Gasbehältern ab. Dies beruht darauf, dass Stickstoffatome durch das Metall der Kugel nach aussen diffundieren. In der Praxis hat sich gezeigt, dass nach drei Jahren der Druck bis ca. 50% des ursprünglichen Wertes gesunken ist — für einen Gasbehälter einer Vorderradaufhängung von ca. 75 bar auf ca. 40 bar. Dies hat zur Folge, dass der verfügbare Federweg mit der Zeit kleiner wird. Dieser Prozess verläuft jedoch so allmählich, dass der Fahrer eines Fahrzeugs mit dieser Art der Federung hiervon am Anfang kaum etwas merkt, und zwar gerade deshalb nicht, weil das Federsystem dafür sorgt, dass die Höhe des Fahrzeugs oberhalb der Strassenoberfläche auf dem richtigen Wert gehalten wird. Für die Wiederherstellung des ursprünglichen Fülldrucks ist es erforderlich, dass die Gasbehälter demontiert werden. Dieses kostet einige Stunden an Demontage- und Montagearbeit und ist somit entsprechend teuer. Ausserdem sind bei älteren Automodellen die betreffenden Teile so festgerostet und die Sicherheitsteile durch Korrosion so geschwächt, dass eine Demontage nicht möglich ist, ohne dass ernsthafte Schäden an anderen Teilen des Federsystems verursacht werden. In der Praxis sieht es so aus, dass kein Besitzer und bestimmt kein Besitzer eines älteren Fahrzeugs an diesem Problem etwas ändern lässt. Das Ergebnis ist, dass bei einer grossen Menge älterer Citroens der ursüngliche Federkomfort vollständig verloren gegangen ist und das Fahrverhalten sich bedeutend verschlechtert hat.

Eine Fülleinrichtung der eingangs beschriebenen Art, mit der prinzipiell die Gasbehälter ohne Demontage gefüllt werden könnten, ist aus der FR-A-2 331 748 bekannt. Diese bekannte Einrichtung nimmt jedoch sowohl in der Länge als auch im Durchmesser ziemlich viel Platz in Anspruch, so dass die Nutzung dieser Einrichtung für das Nachfüllen der Gasbehälter ohne Demontage problematisch ist. Ferner hat diese bekannte Einrichtung den Nachteil, dass das Andrücken der Füllhülse gegen die Behälteraussenwandung durch eine Anzahl von zwischen dem Flansch und dem Spannelement angebrachten Tellerfedern bewirkt wird, die in der Lage sein müssen, eine grosse Kraft auszuüben, und dass die Einrichtung sich nur dazu eignet, mit einem speziellen Schraub- oder Austauschverschluss benutzt zu werden, dessen im Gasbehälter eingeschraubtes Gewindeteil mit einer in Längsrichtung verlaufenden Aussparung und dessen zylindrischer, ausserhalb des Gasbehälters gelegene Teil mit einem Aussengewinde mit Linksgewinde und einer Queraussparung für das Zusammenwirken mit den Teilen zum Los- und Festdrehen des Verschlusses versehen sind. Die genannten Teile bestehen aus einem drehbaren und abdichtenden, an der Oberseite des Spannelements aufgenommenen, bis ausserhalb des Spannelements erstreckenden Bedienungskästchen, das in die das quadratische Ende eines gegen den Federdruck innerhalb des Spannelements aufgenommenen, in Längsrichtung verschiebbaren Teils passt, das mit einem mit der Aussparung zusammenwirkenden Schraubenzieherteil versehen ist. Diese bekannte Fülleinrichtung ist vom Aufbau her kompliziert und aufgrund dessen teuer in der Herstellung.

Die Erfindung bezweckt die Schaffung einer einfachen, leicht zu bedienenden und sehr betriebssicheren Fülleinrichtung, die sehr wenig Platz einnimmt und somit auch bei ziemlich engem Einbau benutzt werden kann, wobei damit speziell die Gasbehälter von Motorfahrzeugen der o.a. Typen ohne Demontage gefüllt werden sollen.

Eine solche Fülleinrichtung ist gemäss der Erfindung dadurch gekennzeichnet, dass der zylindrische Teil des Austauschverschlusses eine Bohrung mit Innengewinde aufweist und die mit dem Austauschverschluss zusammenwirkenden Teile aus einem zylindrischen Gewindestift bestehen, der mit einem an einem Ende angeordneten, in dieses Innengewinde passenden und lösbar einschraubbaren ersten Aussengewinde und mit einem am andere Ende angeordneten zweiten Aussengewinde versehen ist, dessen Gewindesteigung mit der des Aussengewindes des Austauschverschlusses übereinstimmt, wobei der Gewindestift abdichtend in das mit einem Innengewinde versehene Spannelement einschraubbar ist.

Die erfindungsgemässe Fülleinrichtung besteht aus nur einigen zylindrischen, über Schraubgewinde miteinander zusammenwirkenden Teilen, die mit einfachen spanabhebenden Bearbeitungen hergestellt werden können. Das Andrücken der Füllhülse gegen die Behälteraussenwand wird nicht mittels Druckfedern bewirkt, sondern erfolgt über zusammenwirkende Gewindeteile, wodurch jederzeit eine zuverlässige Abdichtung gewährleistet ist. Der Austauschverschluss hat kein Aussengewinde, das beschädigt werden könnte, sondern ein wenig gefährdetes Mittelgewinde, und es kann die gemäss dem Stand der Technik erforderliche Längsrille entfallen.

Bevorzugte Ausführungsformen und vorteilhafte Details der Einrichtung gemäss der Erfindung sind in den Unteransprüchen beschrieben.

Die Erfindung bezieht sich ferner auf die Benutzung eines Austauschverschlusses in Kombination mit einer Fülleinrichtung gemäss der Erfindung.

Die Erfindung wird anhand der Zeichnung erläutert.

Fig. 1 ist ein Querschnitt der kompletten Fülleinrichtung gemäss der Erfindung, montiert auf einen zu füllenden Gasbehälter.

Die Fig. 2a, 2b und 2c dienen der Erläuterung der Montage dieser Einrichtung.

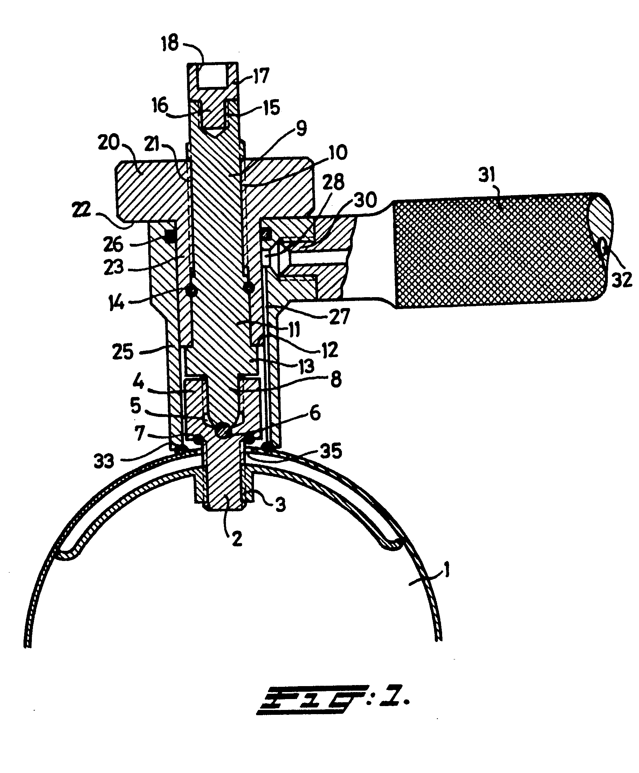

In Fig. 1 ist mit der Bezugsziffer 1 der kugelförmige Gasbehälter einer hydro-pneumatischen Federeinrichtung von z.B. einem Kraftfahrzeug des Typs Citroen DS, GS, BX oder CX angegeben. Ein solcher Gasbehälter 1 ist durch eine gasdichte Membran in zwei Kammern unterteilt, von der eine mit Stickstoff gefüllt ist und unter einem Druck von 60 bis 80 bar steht. Nach einer gewissen Zeit diffundiert der Stickstoff durch das Metall nach aussen, so dass der Druck in dem Gasbehälter 1 abnimmt. Die Fülleinrichtung gemäss der Erfindung macht es möglich, den Gasbehälter 1 erneut unter Druck mit Stickstoff zu füllen.

Diese Einrichtung umfasst einen Austauschverschluss 2 mit Aussengewinde 3, der ebenso ausgebildet ist wie der ursprüngliche, auf dem Gasbehälter 1 angebrachte Schraubverschluss, so dass der Austauschverschluss 2 an dessen Stelle in den Gasbehälter 1 geschraubt werden kann. Der Austauschverschluss 2 hat einen zylindrischen Teil 4 mit einer Bohrung 5, die mit einem Innengewinde versehen ist. Auf dem Boden dieser Bohrung 5 ruht eine stahlharte Kugel 6. Um das Aussengewinde 3 ist ein O-Ring angeordnet, der die Abdichtung nach dem Füllen sichert.

In die Bohrung 5 passt das Gewindeende 8 eines Gewindestiftes 9, der über einen Teil seiner Länge mit einem Aussengewinde 10 versehen ist, das zwar einen grösseren Durchmesser als das Aussengewinde 3 hat, jedoch über die gleiche Gewindesteigung verfügt. Auf das Aussengewinde 10 folgt ein zylindrischer Abschnitt 11, der über eine Schulter in einen verbreiterten Teil 13 übergeht. In dem zylindrischen Abschnitt 11 ist ein Abdichtungsring 14 angeordnet. Am oberen Ende ist der Gewindestift 9 mit einer Bohrung 15 mit Innengewinde versehen, in die ein Gewindeende 16 eines Stopfens 17 passt, der mit einem Innensechskant 18 versehen ist.

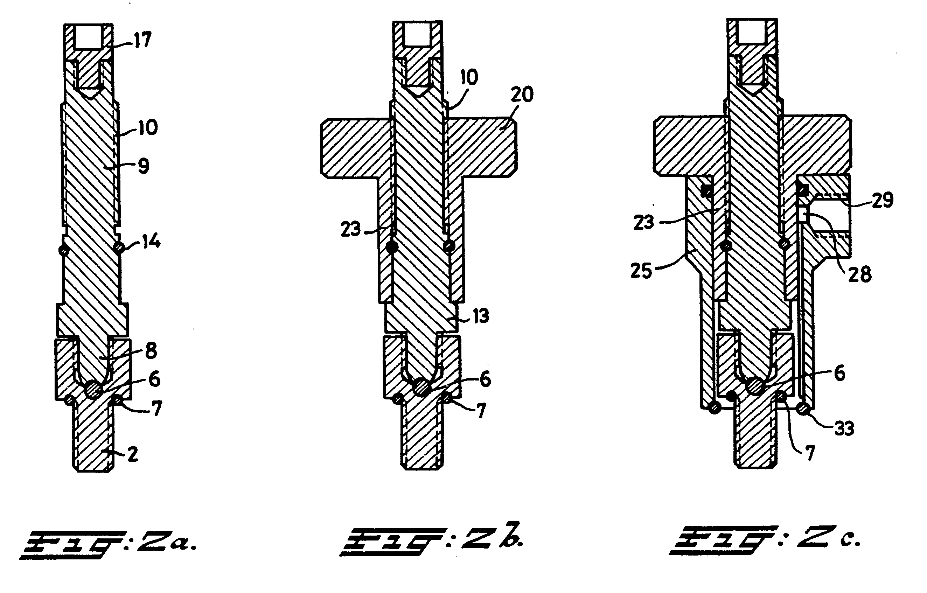

Auf den Gewindestift 9 ist ein Spannelement 20 geschraubt, das mit einem Innengewinde 21, mit einem Flansch 22 und einem zylindrischen Teil 23 versehen ist. Das Spannelement 20 ist von einer Füllhülse 25 umgeben, in deren Innenbohrung ein O-Ring 26 angeordnet ist. In deren Innenwand ist eine Nut 27 eingefräst, die in der Füllöffnung 28 endet. Diese Füllöffnung 28 setzt sich in einer verbreiterten Bohrung 29 fort (siehe Fig. 2c), die mit einem Innengewinde versehen ist, in das das Gewindeende 30 eines Handgriffs 31 passt, der einen in die Füllöffnung 28 mündenden Füllkanal 32 aufweist. An der Unterseite weist die Hülse 25 einen Abdichtungsring 33 auf.

Diese Einrichtung arbeitet wie folgt:

Vor dem Füllen wird der ursprüngliche Schraubverschluss aus dem Gasbehälter 1 entfernt. Der Austauschverschluss 2 wird zusammen mit der Kugel 6 von Hand auf das Gewindeende 9 geschraubt. Dieser Zustand ist in Fig. 2a dargestellt.

Anschliessend wird das Spannelement 20 auf das Aussengewinde 10 des Gewindestiftes 9 geschraubt, und zwar so weit, dass das untere Ende des zylindrischen Teils 23 an die obere Schulter des verbreiterten Teils 13 anliegt. Die sich dann ergebende Anordnung der Teile zueinander ist in Fig. 2b dargestellt.

Danach wird die Füllhülse 25 über den zylindrischen Teil 23 geschoben, wie aus Fig. 2c zu ersehen ist, und anschliessend der Handgriff 31 eingeschraubt.

Der Austauschverschluss 2 wird nun auf den Gasbehälter 1 plaziert und durch Drehen des Spannelements 30 in das Aussengewinde 3 des Gasbehälters 1 geschraubt. Die Längsabmessungen der zusammengesetzten Teile sind dabei so gewählt, dass, wenn der Abdichtungsring 33 am unteren Ende der Hülse 25 abdichtet, an der äusseren Oberfläche des Gasbehälters 1 zwischen dem Austauschverschluss 2 und der Öffnung des Gasbehälters 1 noch eine ringförmige Öffnung 35 freibleibt. Es wird dann Stickstoff unter Druck aus einer geeigneten Quelle, z.B. eines Hochdruckstickstoffzylinders, über den Füllkanal 32, die Füllöffnung 28, die Nut 27 und diese Öffnung 35 eingeführt, bis der Druck in dem Gasbehälter 1 den gewünschten Endwert erreicht hat.

Die Öffnung 35 in dem Gasbehälter 1 wird durch Festhalten des Spannelements 20 und durch Festdrehen des Gewindestiftes 9 mittels eines geeigneten Werkzeuges geschlossen. Da die Aussengewinde 3 und 10 über eine gleiche Gewindesteigung verfügen, wird der Austauschverschluss 2 beim Festdrehen des Gewindestiftes 9 in die Füllöffnung geschraubt, bis der O-Ring 7 abdichtend gegen die äussere Oberfläche des Gasbehälters 1 anliegt. Die Öffnung 35 ist dann geschlossen.

Das Werkzeug wird jetzt durch Linksdrehen des Gewindestiftes 9 demontiert, wodurch die Oberfläche des Teils 8 sich von der Kugel 7 löst. Der Austauschverschluss 2 bleibt dann in dem Gasbehälter 1 zurück. Der Austauschverschluss 2 wird schliesslich mit einem geeigneten Werkzeug noch zusätzlich festgedreht und mit einer Kunststoffkappe abgeschlossen.

**Patentansprüche**

1. Fülleinrichtung zum Füllen eines mit einem Schraubverschluss versehenen, unter Druck stehenden Gasbehälters (1), insbesondere einer hydro-pneumatischen Federeinrichtung, mit einem Austauschverschluss (2) mit gleichem Aussengewinde (3) wie der ursprüngliche Schraubverschluss des Gasbehälters (1), mit einer abdichtenden, mit der Gasbehälterwandung zusammenwirkenden Schulter (7) und mit einem zu dem Aussengewinde (3) koaxialen zylindrischen Teil (4), mit einem einen Flansch (22) und einen zylindrischen Teil (23) aufweisenden Spannelement (20) und einer mit einer Füllöffnung (28) versehenen Füllhülse (25), die den zylindrischen Teil (23) des Spannelements (20) abdichtend umgibt und mit einem von der Füllöffnung (28) ausgehenden Kanal (27) versehen ist und die zwischen dem Flansch (22) und der Wandung des Gasbehälters (1) abgedichtet verspannbar ist, wobei innerhalb des Spannelements (20) mit dem Austauschverschluss (2) zusammenwirkende Teile (9) angeordnet sind, dadurch gekennzeichnet, dass der zylindrische Teil (4) des Austauschverschlusses (2) eine Bohrung (5) mit Innengewinde aufweist und die mit dem Austauschverschluss (2) zusammenwirkenden Teile aus einem zylindrischen Gewindestift (9) bestehen, der mit einem an einem Ende angeordneten, in dieses Innengewinde passenden und lösbar einschraubbaren ersten Aussengewinde (8) und mit einem am anderen Ende angeordneten zweiten Aussengewinde (10) versehen ist, dessen Gewindesteigung mit der des Aussengewindes (3) des Austauschverschlusses (2) übereinstimmt, wobei der Gewindestift (9) abdichtend in das mit einem Innengewinde (21) versehene Spannelement (20) einschraubbar ist.

2. Fülleinrichtung nach Anspruch 1, dadurch gekennzeichnet, dass zwischen dem Ende (8) des Gewindestiftes (9) und dem Boden der Bohrung (5) des Austauschverschlusses (2) eine Kugel (6) aus Hartmetall angeordnet ist.

3. Fülleinrichtung nach Anspruch 1 oder 2, dadurch gekennzeichnet, dass in die Schulter des Austauschverschlusses (2) ein O-Ring eingelassen ist.

4. Fülleinrichtung nach einem der Ansprüche 1 bis 3, dadurch gekennzeichnet, dass in der Bohrung der Füllhülse (25) sowohl an dem behälterseitigen Ende als auch oberhalb der Füllöffnung (28) je ein O-Ring (26, 33) angeordnet sind.

5. Fülleinrichtung nach einem der Ansprüche 1 bis 4, dadurch gekennzeichnet, dass in der Aussenwand des Gewindestiftes (9) in kurzer Entfernung unterhalb des zweiten Aussengewindes (10) ein O-Ring (14) angeordnet ist.

6. Fülleinrichtung nach einem der Ansprüche 1 bis 5, dadurch gekennzeichnet, dass die Füllöffnung (28) mit einem Innengewinde zur Aufnahme eines mit einem Füllkanal (32) versehenen Handgriffs (31) versehen ist.

7. Austauschverschluss (2) zur Benutzung in Kombination mit einer Fülleinrichtung nach einem oder mehreren der Ansprüche 1 bis 6, gekennzeichnet durch einen zylindrischen Teil mit gleichem Aussengewinde (3) wie der ursprüngliche Schraubverschluss des Gasbehälters (1), der über eine Schulter in ein damit koaxiales zylindrisches Teil (4) übergeht und mit einer Bohrung (5) versehen ist, die ein Innengewinde aufweist, das dem Aussengewinde (8) am Ende des Gewindestiftes (9) entspricht.

## Claims

1. Filling device for filling a pressurised gas container (1), in particular of a hydro-pneumatic spring mechanism, which gas container is provided with a screw closure, with a replacement closure (2) having the same external thread (3) as the original screw closure of the gas container (1), with a sealing shoulder (7) co-operating with the wall of the gas container and with a cylindrical part (4) coaxial to the external thread (3), with a clamping member (20) comprising a flange (22) and a cylindrical part (23) and a filling sleeve (25) provided with a filling opening (28), which sealingly surrounds the cylindrical part (23) of the clamping member (20) and is provided with a channel (27) starting from the filling opening (28) and which can be clamped in a sealing manner between the flange (22) and the wall of the gas container (1), parts (9) co-operating with the replacement closure (2) being arranged within the clamping member (20), characterised in that the cylindrical part (4) of the replacement closure (2) comprises a bore (5) with an internal thread and the parts co-operating with the replacement closure (2) consists of a cylindrical threaded pin (9), which is provided with a first external thread (8) located at one end, which fits in this internal thread and can be screwed therein in a releasable manner and with a second external thread (10) located at the other end, whereof the thread pitch corresponds to that of the external thread (3) of the replacement closure (2), the threaded pin (9) being able to be screwed in a sealing manner into the clamping member (20) provided with an internal thread (21).

2. Filling device according to Claim 1, characterised in that a ball (6) of hard material is located between the end (8) of the threaded pin (9) and the base of the bore (5) of the replacement closure (2).

3. Filling device according to Claim 1 or 2, characterised in that an O-ring is let into the shoulder of the replacement closure (2).

4. Filling device according to one of Claims 1 to 3, characterised in that an O-ring (26, 33) is respectively located in the bore of the filling sleeve (25) both at the end adjacent to the container as well as above the filling opening (28).

5. Filling device according to one of Claims 1 to 4, characterised in that an O-ring (14) is located in the outher wall of the threaded pin (9) at a short distance below the second external thread (10).

6. Filling device according to one of Claims 1 to 5, characterised in that the filling opening (28) is provided with an internal thread for receiving a handle (31) provided with a filling channel (32).

7. Replacement closure (2) for use in combination with a filling device according to one or more of Claims 1 to 6, characterised by a cylindrical part with the same external thread (3) as the original screw closure of the gas container (1), which passes by way of a shoulder into a cylindrical part (4) coaxial therewith and is provided with a bore (5) having an internal thread which corresponds to the external thread (8) at the end of the threaded pin (9).

## Revendications

1. Appareil de remplissage pour remplir un récipient à gaz (1) muni d'un bouchon à vis et qui est sous pression, en particulier d'un dispositif de suspension hydropneumatique, comprenant un bouchon de remplacement (2) avec le même filetage extérieur (3) ou le bouchon à vis d'origine du récipient à gaz (1), un épaulement d'étanchéité (7) coopérant avec la paroi du récipient, une pièce cylindrique (4) coaxiale au filetage extérieur (3), une pièce de serrage (20) présentant un collet (22) et une partie cylindrique (23), une tubulure de remplissage (25), pourvue d'un orifice de remplissage (28), qui entoure de façon étanche la partie cylindrique (23) de la pièce de serrage (20) et est dotée d'un canal (27) partant de l'orifice de remplissage (28), tubulure qui peut être bloquée étanche entre le collet (22) et la paroi du récipient à gaz (1), ainsi que des éléments (9) coopérant avec le bouchon de remplacement (2) et disposés à l'intérieur de la pièce de serrage (20), caractérisé en ce que la pièce cylindrique (4) du bouchon de remplacement (2) présente un trou (5) avec un filetage intérieur et les éléments coopérant avec le bouchon de remplacement (2) sont constitués par une broche cylindrique filetée (9), pourvue à une extrémité d'un premier filetage extérieur (8) s'ajustant dans le filetage intérieur de la pièce cylindrique (4) et pouvant être vissé amovible dans ce filetage, de même qu'un second filetage extérieur (10), prévu sur l'autre extrémité de la broche (9), dont le pas correspond à celui du filetage extérieur (3) du bouchon de remplacement (2), la broche étant conçue pour être vissé étanche dans la pièce de serrage (20), dotée d'un filetage intérieur (21).

2. Appareil selon la revendication 1, caractérisé en ce qu'une bille (6) en matériau dur est placée entre le bout (8) de la broche (9) et le fond du trou (5) du bouchon de remplacement (2).

3. Appareil selon la revendication 1 ou 2, caractérisé en ce qu'un joint torique est disposé dans l'épaulement du bouchon de remplacement (2).

4. Appareil selon une des revendications 1 à 3, caractérisé en ce que l'alésage de la tubulure de remplissage (25) contient un joint torique (33) à l'extrémité côté récipient (1) et un joint torique (26) au-dessus de l'orifice de remplissage (28).

5. Appareil selon une des revendications 1 à 4, caractérisé en ce que la surface de la broche (9) contient un joint torique (14) à une faible distance sous le second filetage extérieur (10).

6. Appareil selon une des revendications 1 à 5, caractérisé en ce que l'orifice de remplissage (28) présente un filetage intérieur pour la réception d'une poignée (31) pourvue d'un canal de remplissage (32.).

7. Bouchon de remplacement (2) destiné à être utilisé en combinaison avec un appareil selon l'une quelconque des revendications 1 à 6, caractérisé par une partie cylindrique portant le même filetage extérieur (3) que le bouchon à vis d'origine du récipient à gaz (1) et se raccordant par un épaulement à une pièce cylindrique (4) coaxiale à elle qui présente un trou (5) avec un filetage intérieur complémentaire au filetage extérieur du bout (8) de la broche filetée (9).

FIG.1.

FIG: 2a.

FIG: 2b.

FIG: 2c.

0 171 126